# EUROPÄISCHE PATENTSCHRIFT

(11) **EP 3 337 721 B1**
(45) Veröffentlichungstag und Bekanntmachung des Hinweises auf die Patenterteilung: **20.11.2024**
(21) Anmeldenummer: 16759723.6
(22) Anmeldetag: 25.08.2016
(51) Int. Cl.: B62M 6/45, B62M 6/50, B62M 6/55, B62K 19/30, B62K 23/02, B62K 23/06

(54) **ELEKTROFAHRRAD**
ELECTRIC BICYCLE
BICYCLETTE ÉLECTRIQUE

(30) Priorität: 25.08.2015 DE 102015216178; 25.08.2015 DE 102015216188; 25.08.2015 DE 102015216186
(43) Veröffentlichungstag der Anmeldung: 27.06.2018
(73) Patentinhaber: Biketec GmbH, 4950 Huttwil (CH)
(72) Erfinder: DURDEVIC, Ivica, 4950 Huttwil (CH); STUDER, Lukas Beat, 4623 Neuendorf (CH); SUTER, Philipp Walter, 6032 Emmen (CH); LANZ, Simon, 4955 Gondiswil (CH); WOODTLI, Robin, 4500 Solothurn (CH); WOELK, Timo, 83730 Fischbachau (DE); AFZAL, Omar, 81379 Muenchen (DE)
(74) Vertreter: Isarpatent
(86) Internationale Anmeldenummer: PCT/EP2016/070081
(87) Internationale Veröffentlichungsnummer: WO 2017/032832

(56) Entgegenhaltungen:
- CN-U- 202 429 321
- CN-U- 202 716 986
- DE-A1- 102010 039 860
- KR-A- 20130 013 115
- TW-A- 201 524 838
- US-A- 5 798 702
- US-A1- 2005 280 244
- US-A1- 2014 080 661
- US-B1- 6 401 997
- US-B1- 6 682 087

## Beschreibung

Die vorliegende Erfindung betrifft ein Elektrofahrrad gemäß dem Oberbegriff des Anspruchs 1.

Elektrofahrräder, beispielsweise Pedelecs oder E-Bikes, erfreuen sich als leicht zu handhabendes, emissionsfreies Fortbewegungsmittel großer Beliebtheit. Für unterschiedliche Einsatzfelder sind besonders geeignete Fahrradtypen verfügbar. Hierzu gehören u.a. für den Freizeiteinsatz oder den Weg zur Arbeit auf der Straße oder im leichten Gelände optimierte Fahrräder (bspw. Citybikes oder Tourenbikes) und die für den Einsatz im Gelände und speziell auch bergigem Gelände entwickelten E-Mountainbikes (E-MTB) in verschiedenen Ausführungen. Elektrofahrräder bieten die Möglichkeit ohne Überbeanspruchung des Fahrers den Einsatzradius zu vergrößern und die durchschnittliche Fahrgeschwindigkeit zu erhöhen.

Aus dem Stand der Technik sind Elektrofahrräder bekannt, welche neben einer Antriebseinheit, einer Batterieeinheit, einer Anzeigeeinheit (engl. Display) und einer Fernbedienungseinheit (engl. Remote) für die Anzeigeeinheit insbesondere eine elektronische Steuereinheit (ECU; Electronic Control Unit) zur Funktionssteuerung aufweisen. Die elektronische Steuereinheit ist hierbei der im Bereich des Unterrohrs angeordneten Batterieeinheit zugeordnet. Nachteilig bei einer derartigen ECU-Anordnung ist, dass weniger Bauraum für die Batteriezellen und damit eine verringerte Reichweite zur Verfügung steht. Ferner kann diese Anordnung zu thermischen Problemen führen, da insbesondere die Batteriezellen aber auch die elektronischen Komponenten der Steuereinheit Wärme abführen. Ferner sind spezielle Batteriegehäuse mit Befestigungsmöglichkeit für die Steuereinheit erforderlich. Insgesamt benötigen derartige Batteriepacks daher relativ viel Bauraum und können dadurch die Handlichkeit verschlechtern. Dokument CN 202 716 986 offenbart den Oberbegriff des Anspruchs 1.

Der Erfindung liegt daher die Aufgabe zugrunde, ein neuartiges Fahrradkonzept bereitzustellen, welches elektrisch unterstützte Mobilität mit den Ansprüchen sportlich und Lifestyle-orientierter Radfahrer in Übereinstimmung bringt.

Diese Aufgabe wird durch ein Elektrofahrrad mit der Merkmalskombination des Anspruchs 1 gelöst.

Ein erfindungsgemäßes Elektrofahrrad weist eine elektronische Steuereinheit, eine Antriebseinheit, eine Batterieeinheit, eine Anzeigeeinheit und eine Fernbedienungseinheit für die Anzeigeeinheit auf, wobei die Fernbedienungseinheit im Bereich eines Lenkergriffes entfernt von der Anzeigeeinheit angeordnet ist. Erfindungsgemäß ist die elektronische Steuereinheit im Sitzrohr des Fahrradrahmens angeordnet. Dadurch wird eine hochintegrierte Interaktion zwischen Rahmen und Einbauelementen erreicht. Die Bauweise der vorzugsweise im Unterrohr des Fahrradrahmens angeordneten Batterieeinheit ist nicht eingeschränkt und es steht mehr Bauraum für die Batteriezellen und damit eine hohe Reichweite zur Verfügung. Aufgrund der thermischen Entkoppelung von Batterieeinheit und elektronischer Steuereinheit wird ein hoher Wirkungsgrad erreicht. Spezielle Batteriegehäuse mit Befestigungsmöglichkeit für die Steuereinheit sind nicht erforderlich. Insgesamt wird bei dieser Variante eine kompakte, homogene Rahmenform höchster Festigkeit erreicht. Das erfindungsgemäße Konzept wird daher auch den Ansprüchen eines lifestyle betonten, sportlich ambitionierten Fahrers gerecht.

Erfindungsgemäß, ist die elektronische Steuereinheit im unteren Bereich des Sitzrohrs benachbart zur Antriebseinheit angeordnet.

Dadurch ist die elektrische Leitungslänge auf ein Minimum reduziert. Das Elektrofahrrad hat einen optimierten Rahmenquerschnitt mit konstruktiv und ästhetisch besten Eigenschaften bei optimiertem Bauraumbedarf.

Erfindungsgemäß, ist die elektronische Steuereinheit am rahmenseitigen Antriebsträger (Motorbracket) der Antriebseinheit befestigt. Dadurch werden keine weiteren rahmenseitigen Befestigungselemente benötigt. Eine Gewichtsreduzierung kann erreicht werden.

Die elektronische Steuereinheit ist vorzugsweise lediglich an einem der Antriebseinheit zugewandten Endabschnitt mit Leitungsanschlüssen versehen, so dass der Aufbau vereinfacht und die Leitungslängen minimal sind. Alle Leitungen werden vorzugsweise im Rahmen unten herausgeführt.

Gemäß einer besonders bevorzugten Ausführungsform der Erfindung ist oberhalb der elektronischen Steuereinheit zumindest ein Anschlag, insbesondere ein Befestigungselement der Flaschenhalterung, bspw. eine Flaschenhalterbuchse, für die Sattelstütze angeordnet. Dadurch ist verhindert, dass die elektronische Steuereinheit von einer langen Sattelstütze beschädigt werden kann.

Vorzugsweise sind zumindest eine Leitung der Fernbedienungseinheit mit der Anzeigeeinheit und mindestens eine elektrische Leitung der Anzeigeeinheit mit der elektronischen Steuereinheit verbunden. Als besonders vorteilhaft hat es sich erwiesen, wenn lediglich eine Sammelleitung zwischen der Fernbedienungseinheit und der Anzeigeeinheit vorgesehen ist. Ferner ist es besonders vorteilhaft, wenn lediglich eine Sammelleitung zwischen der Anzeigeeinheit und der elektronischen Steuereinheit vorgesehen ist. Die Anzahl der zu verlegenden Leitungen und damit Gewicht sowie Montageaufwand sind daher minimiert.

Besonders vorteilhaft ist es, wenn die Bremssignalleitungen unmittelbar mit der Anzeigeeinheit und nicht direkt mit der ECU verbunden sind. Dadurch ist lediglich eine elektrische Leitung zwischen der elektronischen Steuereinheit und der Anzeigeeinheit erforderlich. Die Anzahl der Leitungen ist reduziert. Bei der Bremsbetätigung wird das Bremslicht aktiviert.

Entsprechend wird es bevorzugt, wenn die Fernbedienungseinheit mit einem einzelnen Sammelkabel, welches mehrere Signalleitungen beinhaltet, mit der Anzeigeeinheit verbunden ist.

Gemäß eines besonders bevorzugten Ausführungsbeispiels der Erfindung sind weitere Sensorleitungen jeweils unmittelbar mit der elektronischen Steuereinheit verbunden. Die Anzahl der Leitungen ist hierbei ebenfalls reduziert. Hierbei können insbesondere vorgesehen sein: Sensor des Seitenständers (Sicherheitsdeaktivierung bei heruntergeklapptem Ständer), Sensor des Getriebes, Beschleunigungssensoren (3D-Gyro und Accelometer), Sensor zur Erfassung einer Fahrradfaltung bei Falträdern, Drucksensoren und Temperatursensoren.

Die Kommunikation erfolgt vorzugsweise mittels CAN-Bus-Verfahren, besonders bevorzugt CAN-Open-Verfahren. Ein CAN-Translator ist bei Anpassungserfordernissen vorgesehen.

Die Fernbedienungseinheit für die Anzeigeeinheit ist bei einem besonders bevorzugten Ausführungsbeispiel der Erfindung im Bereich eines Lenkergriffes entfernt von der Anzeigeeinheit angeordnet und weist Unterstützungswahltasten für die Wahl der Unterstützungsstufe sowie zumindest ein Eingabegerät zur Menü-Navigation und Auswahl von auf der Anzeigeeinheit dargestellten Menüpunkten auf.

Als besonders vorteilhaft hat es sich erwiesen, wenn Eingabegerät und Unterstützungswahltasten entlang einer gemeinsamen Linie angeordnet sind. Die gemeinsame Linie kann ergonomisch bogenförmig mehrdimensional gekrümmt sein.

Das Eingabegerät und die Tasten sind vorzugsweise untereinander derart angeordnet, dass diese mit dem Daumen des Fahrers ergonomisch bedienbar sind. Ein sicherheitskritisches Umgreifen des Fahrers ist zur Bedienung von Unterstützungswahltasten und Eingabegerät nicht erforderlich.

Bei einem besonders bevorzugten Ausführungsbeispiel der Erfindung ist das Eingabegerät als Joystick ausgebildet. Die Menü-Navigation und Auswahl von auf der Anzeigeeinheit dargestellten Menüpunkten kann dadurch intuitiv und ergonomisch bevorzugt mit dem Daumen des Fahrers erfolgen.

Der Joystick ist vorzugsweise in alle vier Richtungen beweglich (nach oben und unten; nach links und rechts), wobei die Auswahl/Selektion von Menüpunkten mittels Druck auf den Joystick erfolgt (Druckfunktion) . Die Menü-Navigation und Auswahl der Menüpunkte erfolgt mit dem multifunktionalen Joystick, so dass keine weiteren Bedienelemente erforderlich sind. Die Fernbedienungseinheit ist dadurch äußerst kompakt und ästhetisch ansprechend ausgebildet. Der Joystick kann ein hinterleuchtetes Symbol, insbesondere ein Rechteck mit abgerundeten Ecken aufweisen.

Als besonders vorteilhaft hat es sich erwiesen, wenn die Unterstützungswahltasten zueinander geneigt angeordnet sind. Die Wahl der Unterstützungsstufe kann hierbei ergonomisch mit dem Daumen des Fahrers erfolgen. Die Unterstützungswahltasten bilden vorzugsweise einen konkaven Abschnitt aus. Der Daumen kann zwischen den übereinander angeordneten Tasten ruhen, so dass die Betätigung intuitiv erfolgt, wobei die Unterstützungswahltaste zur Erhöhung der Unterstützungsstufe vorzugsweise in Fahrtrichtung vorne und die Unterstützungswahltaste zur Verringerung der Unterstützungsstufe in Fahrtrichtung hinten angeordnet ist.

Weiterhin wird es bevorzugt, wenn die Unterstützungswahltasten in Richtung der Hand des Fahrers geneigt angeordnet sind. Die Bedienung kann ergonomisch bevorzugt mit dem Daumen des Fahrers erfolgen.

Die Unterstützungswahltaste zur Erhöhung der Unterstützungsstufe ist vorzugsweise mit einem Plus-Symbol und die Unterstützungswahltaste zur Verringerung der Unterstützungsstufe mit einem Minus-Symbol gekennzeichnet. Die Symbole sind vorzugsweise hinterleuchtet und dadurch auch bei schlechten Sichtverhältnissen erkennbar.

Als fertigungstechnisch und für die Bedienung vorteilhaft hat es sich erwiesen, wenn die Unterstützungswahltasten einen freien, der Hand des Fahrers zugewandten Betätigungsabschnitt sowie einen elastisch gelagerten Endabschnitt aufweisen.

Gemäß einer bevorzugten Ausführungsform der Erfindung ist ein Lichtschalter im Bereich zwischen den Unterstützungswahltasten seitlich versetzt angeordnet. Vorzugsweise ist der Lichtschalter in Richtung entfernt von der Hand des Fahrers neben den Unterstützungswahltasten angeordnet. Als besonders ergonomisch hat es sich erwiesen, wenn der Lichtschalter mittig zwischen den Unterstützungswahltasten seitlich versetzt angeordnet ist.

Der Lichtschalter weist bevorzugt drei Funktionen auf, welche jeweils durch Tastendruck sequentiell aktiviert werden: Taste gedrückt halten (>2s) Licht ein/aus; Tastendruck Abblendlicht, zweiter Tastendruck Licht aufblenden. Vorteil daher eine Taste für Light On/Low/High/Off. Der Lichtschalter kann ein hinterleuchtetes Lichtsymbol aufweisen.

Bei Elektrofahrrädern mit einer elektronischen Schaltung des Motorgetriebes weist die Fernbedienungseinheit vorzugsweise eine mittig entlang einer Schwenkachse gelagerte Schaltwippe zur Gangwahl auf. Erfindungsgemäß vorteilhaft ist es, wenn die Schaltwippe zwei Betätigungsflächen aufweist, wobei eine erste Betätigungsfläche auf einer der Hand des Fahrers zugewandten Seite und eine zweite Betätigungsfläche auf einer von der Hand des Fahrers abgewandten Seite angeordnet ist. Eingabegerät, Unterstützungswahltasten und Schaltwippe sind vorzugsweise entlang einer gemeinsamen Linie angeordnet. Die Tasten sind vorzugsweise untereinander derart angeordnet, dass diese mit dem Daumen des Fahrers ergonomisch bedienbar sind. Ein sicherheitskritisches Umgreifen des Fahrers ist zur Bedienung von Unterstützungswahltasten, Eingabegerät und Schaltwippe nicht erforderlich.

Bei einer bevorzugten Ausführungsform der Fernbedienungseinheit hat diese ein Oberteil und ein modular auswechselbares Unterteil, wobei die Schaltwippe dem Unterteil zugeordnet ist. Die Fernbedienungseinheit ist daher modular an Fahrräder mit und ohne elektrisches Motorgetriebe anpassbar. Hierzu wird wahlweise ein als Schellenhälfte ausgebildete Unterteil mit bzw. ohne Schaltwippe montiert. Oberteil und Unterteil sind vorzugsweise elektrisch mittels eines Flexbands verbunden.

Die Schaltwippe hat vorzugsweise eine etwa mittig angeordnete Automatik-Taste. Die Automatik-Taste wippt bevorzugt nicht mit und aktiviert die automatische Gangwahl.

In Richtung der Lenkergriffachse betrachtet verlaufen Eingabegerät, Unterstützungswahltasten und Schaltwippe vorzugsweise entlang einer konvex bogenförmigen gemeinsamen Linie, deren Krümmungsverlauf ergonomisch an den Bewegungsbereich des Fahrerdaumens angepasst ist.

Die Fernbedienungseinheit hat vorzugsweise einen Vibrationsmotor. Beispielsweise kann mittels einer kurzen Vibration das Erreichen der höchsten Unterstützungsstufe signalisiert werden. Ferner kann mittels einer kurzen Vibration ein Schaltvorgang vorgeschlagen werden. Vorzugsweise erfolgt ein Gangvorschlag auf der Anzeigeeinheit, bspw. Pfeil nach oben auf Display als Vorschlag hochzuschalten, wobei die Vibration den Fahrer aufmerksam macht, dass die Anzeigeeinheit eine neue Information zeigt.

Die Erfindung kann universell bei allen Typen von Fahrrädern, insbesondere bei Mountainbikes (sowohl in Hardtail- oder Full-Suspension-Bauweise), aber auch bei anderen Fahrrädern, bspw. Straßenrad-Rahmen realisiert werden und somit letztlich ein Touren-, City- oder Cross-Rad oder andere moderne Fahrradtypen ergeben. Sie ermöglicht aufgrund der kompakten, formschönen Bauweise den Aufbau von Rädern, die weitgehend die Vorzüge eines klassischen Fahrrads und eines Elektrofahrrads in sich vereinen.

Weitere bevorzugte Ausführungsformen sind Gegenstand der Unteransprüche.

Im Folgenden wird eine bevorzugte Ausführungsform der vorliegenden Erfindung unter Bezugnahme auf die beiliegenden Zeichnungen näher erläutert. Dabei zeigen die Zeichnungen im Einzelnen:
Figur 1 eine Seitenansicht eines erfindungsgemäßen Elektrofahrrads,
Figur 2 eine Detaildarstellung des Elektrofahrrads aus Figur 1 im Bereich des Fahrradlenkers,
Figur 3 eine schematische Seitenansicht des Elektrofahrrads aus Figur 1.
Figur 4 eine Detailansicht des Antriebsbereichs und
Figur 5 eine Detaildarstellung der elektronischen Steuereinheit.

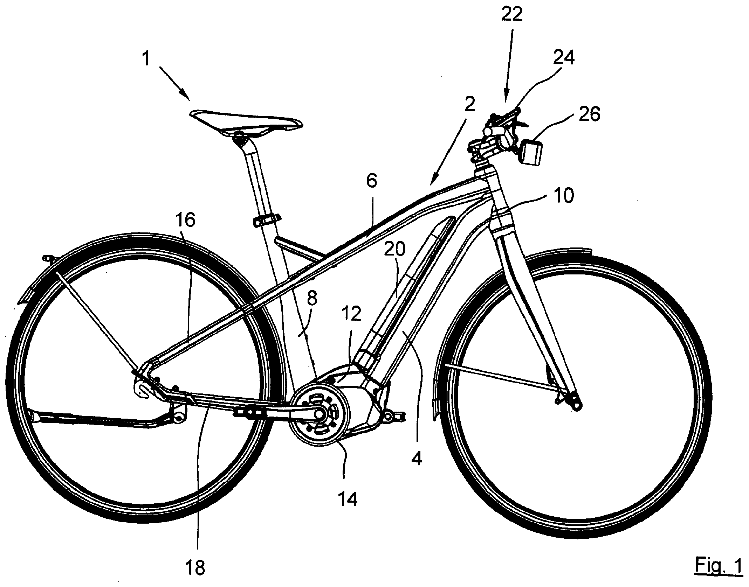

Figur 1 zeigt eine Seitenansicht eines erfindungsgemäßen Elektrofahrrads 1 mit einem exemplarisch als Diamantrahmen ausgebildeten Fahrradrahmen 2 mit einem Unterrohr 4, einem Oberrohr 6, einem Sitzrohr 8, einem Steuerrohr 10, einem Antriebsträger 12 für eine Antriebseinheit 14 sowie Sattelstreben 16 und Unterstreben 18 sowie eine am Unterrohr 4 angeordnete Batterieeinheit 20.

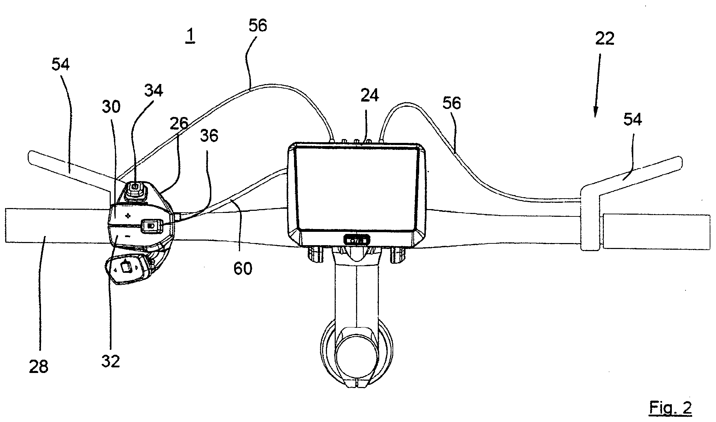

Wie insbesondere Figur 2 zu entnehmen ist, welche eine Detaildarstellung des Elektrofahrrads 1 aus Figur 1 im Bereich des Fahrradlenkers 22 zeigt, ist eine mittig auf dem Lenker 22 angeordnete Anzeigeeinheit 24 und eine Fernbedienungseinheit 26 vorgesehen. Die Fernbedienungseinheit 26 ist im Bereich eines linken Lenkergriffes 28 entfernt von der Anzeigeeinheit 24 angeordnet und weist zwei Unterstützungswahltasten 30, 32 für die Wahl der Motor-Unterstützungsstufe sowie ein als Joystick 34 ausgebildetes Eingabegerät zur Menü-Navigation und Auswahl von auf der Anzeigeeinheit 24 dargestellten Menüpunkten auf. Ferner hat die Fernbedienungseinheit 26 einen Lichtschalter 36.

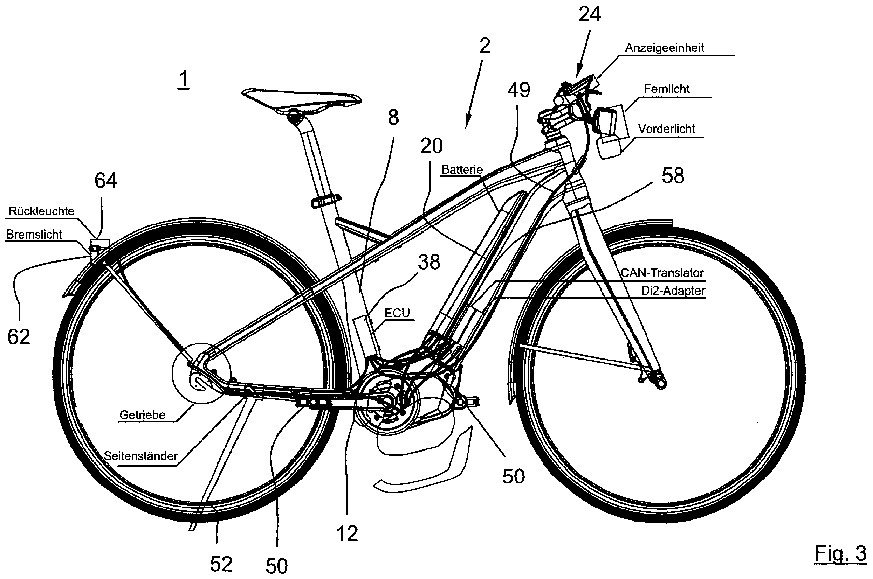

Wie in Figur 3 dargestellt ist, welche eine schematische Seitenansicht des Elektrofahrrads 1 aus Figur 1 zeigt, weist das Elektrofahrrad 1 eine elektronische Steuereinheit 38 (ECU) auf. Die elektronische Steuereinheit 38 ist im Sitzrohr 8 des Fahrradrahmens 2 angeordnet. Dadurch wird eine hochintegrierte Interaktion zwischen Rahmen 2 und Einbauelementen erreicht. Die Bauweise der Batterieeinheit 20 ist nicht eingeschränkt und es steht mehr Bauraum für die Batteriezellen und damit eine hohe Reichweite zur Verfügung. Aufgrund der thermischen Entkoppelung von Batterieeinheit und elektronischer Steuereinheit wird ein hoher Wirkungsgrad erreicht. Spezielle Batteriegehäuse mit Befestigungsmöglichkeit für die Steuereinheit 38 sind nicht erforderlich.

Die elektronische Steuereinheit 38 ist im unteren Bereich des Sitzrohrs 8 auf dem Antriebsträger 12 montiert. Dadurch ist die elektrische Leitungslänge auf ein Minimum reduziert. Das Elektrofahrrad 1 hat dadurch einen optimierten Rahmenquerschnitt mit konstruktiv und ästhetisch besten Eigenschaften bei optimiertem Bauraumbedarf.

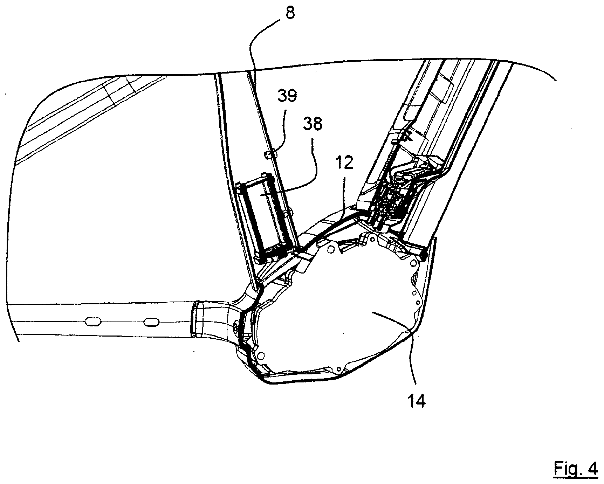

Hierbei ist die elektronische Steuereinheit 38 am rahmenseitigen Antriebsträger 12 befestigt, wie insbesondere in der Detailansicht des Antriebsbereichs gemäß Figur 4 dargestellt ist. Oberhalb der elektronischen Steuereinheit 38 ist eine Flaschenhalterbuchse 39 als Anschlag für die Sattelstütze (nicht dargestellt) angeordnet. Dadurch ist verhindert, dass die elektronische Steuereinheit 38 von einer langen Sattelstütze beschädigt werden kann.

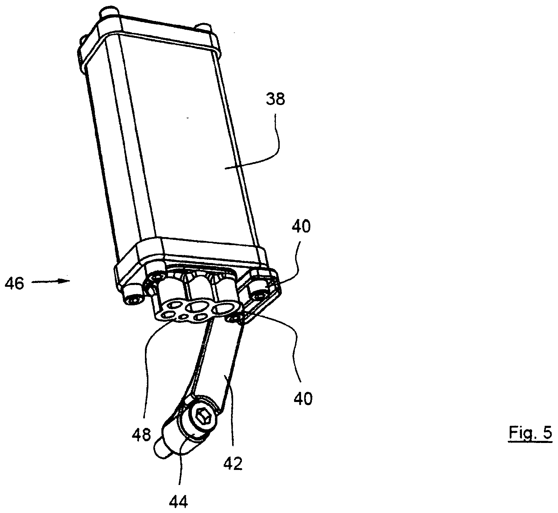

Die Befestigung der Steuereinheit 38 am Antriebsträger 12 erfolgt erfindungsgemäß Figur 5, welche eine Detaildarstellung der elektronischen Steuereinheit 38 zeigt, über einen am rechteckigen Gehäuse der Steuereinheit 38 mittels Schrauben 40 befestigten L-förmigen Befestigungswinkel 42. Die Befestigung des Winkels 42 am Antriebsträger 12 erfolgt ebenfalls mittels einer Schraube 44.

Die elektronische Steuereinheit 38 ist lediglich an einem der Antriebseinheit 14 zugewandten Endabschnitt 46 mit Leitungsanschlüssen 48 versehen, so dass der Aufbau vereinfacht und die Leitungslängen minimal sind. Alle Leitungen werden im Rahmen unten herausgeführt.

Gemäß Figur 3 ist die elektrische Leitung 49 der Anzeigeeinheit 24 mit der elektronischen Steuereinheit 38 verbunden. Vorteilhaft ist hierbei, dass lediglich eine Leitung erforderlich ist.

Ferner sind Sensorleitungen 50 des Seitenständers 52 (Sicherheitsdeaktivierung bei heruntergeklapptem Ständer), des Motorgetriebes etc. jeweils unmittelbar mit der elektronischen Steuereinheit 38 verbunden. Die Anzahl der Leitungen ist hierbei reduziert.

Bremsgriffen 54 zugeordnete Sensorleitungen 56 sind gemäß Figur 2 direkt mit der Anzeigeeinheit 24 verbunden, so dass lediglich eine Leitung 49 zwischen Anzeigeeinheit 24 und Steuereinheit 38 erforderlich ist.

Die ECU-Kommunikation erfolgt mittels CAN-Open-Verfahren. Ein CAN-Translator 58 ist bei Anpassungserfordernissen vorgesehen. Eine Signalleitung 60 der Fernbedienungseinheit 26 ist mit der Anzeigeeinheit 24 verbunden (siehe Figur 2). Insbesondere wird es bevorzugt, wenn die Fernbedienungseinheit mit einem einzelnen Sammelkabel, welches mehrere Signalleitungen beinhaltet, mit der Anzeigeeinheit verbunden ist. Bei der Bremsbetätigung wird ein Bremslicht 62 einer Rückleuchte 64 aktiviert.

Die Erfindung kann universell bei allen Typen von Fahrrädern, insbesondere bei Mountainbikes (sowohl in Hardtail- oder Full-Suspension-Bauweise), aber auch bei anderen Fahrrädern, bspw. Straßenrad-Rahmen realisiert werden und somit letztlich ein Touren-, City- oder Cross-Rad oder andere moderne Fahrradtypen ergeben. Sie ermöglicht aufgrund der kompakten, formschönen Bauweise den Aufbau von Rädern, die weitgehend die Vorzüge eines klassischen Fahrrads und eines Elektrofahrrads in sich vereinen.

Die Ausführung der Erfindung ist nicht auf die in den Figuren gezeigten und oben erläuterten Beispiele beschränkt, sondern ebenso in einer Vielzahl von Abwandlungen eines Fachmanns möglich.

Offenbart ist ein Elektrofahrrad 1 mit einer elektronischen Steuereinheit 38, einer Antriebseinheit 14, einer Batterieeinheit 20, einer Anzeigeeinheit 24 und einer Fernbedienungseinheit 26 für die Anzeigeeinheit 24, wobei die Fernbedienungseinheit 26 im Bereich eines Lenkergriffes 28 entfernt von der Anzeigeeinheit 24 angeordnet ist. Erfindungsgemäß ist die elektronische Steuereinheit 38 im Sitzrohr 8 des Fahrradrahmens 2 angeordnet.

### Bezugszeichenliste

- 1: Elektrofahrrad
- 2: Fahrradrahmen
- 4: Unterrohr
- 6: Oberrohr
- 8: Sitzrohr
- 10: Steuerrohr
- 12: Antriebsträger
- 14: Antriebseinheit
- 16: Sattelstrebe
- 18: Unterstrebe
- 20: Batterieeinheit
- 22: Lenker
- 24: Anzeigeeinheit
- 26: Fernbedienungseinheit
- 28: linker Lenkergriff
- 30: Unterstützungswahltaste
- 32: Unterstützungswahltaste
- 34: Joystick
- 36: Lichtschalter
- 38: elektronische Steuereinheit
- 39: Flaschenhalterbuchse
- 40: Schraube
- 42: Befestigungswinkel
- 44: Schraube
- 46: Endabschnitt
- 48: Leitungsanschluss
- 49: elektrische Leitung
- 50: Sensorleitung
- 52: Seitenständer
- 54: Bremsgriffe
- 56: Sensorleitung
- 58: CAN-Translator
- 60: Signalleitung
- 62: Bremslicht
- 64: Rückleuchte

## Patentansprüche

1. Elektrofahrrad mit einem Fahrradrahmen (2), einer elektronischen Steuereinheit (38), einer Antriebseinheit (14), einer Batterieeinheit (20), einer Anzeigeeinheit (24) und einer Fernbedienungseinheit (26) für die Anzeigeeinheit (24), wobei die Fernbedienungseinheit (26) im Bereich eines Lenkergriffes (28) entfernt von der Anzeigeeinheit (24) angeordnet ist, **dadurch gekennzeichnet, dass** die elektronische Steuereinheit (38) im Sitzrohr (8) des Fahrradrahmens (2) im unteren Bereich angeordnet und am rahmenseitigen Antriebsträger (12) des Fahrradrahmens (2) über einen am rechteckigen Gehäuse der Steuereinheit (38) mittels Schrauben (40; 44) befestigten L-förmigen Befestigungswinkel (42) befestigt ist, und die Befestigung des Winkels (42) am Antriebsträger (12) erfolgt ebenfalls mittels einer Schraube (44).

2. Elektrofahrrad nach Anspruch 1, wobei die elektronische Steuereinheit (38) lediglich an einem der Antriebseinheit (14) zugewandten Endabschnitt (46) mit Leitungsanschlüssen (48) versehen ist.

3. Elektrofahrrad nach einem der vorhergehenden Ansprüche, wobei oberhalb der elektronischen Steuereinheit (38) ein Anschlag (39), insbesondere ein Befestigungselement der Flaschenhalterung, für die Sattelstütze angeordnet ist.

4. Elektrofahrrad nach einem der vorhergehenden Ansprüche, wobei zumindest eine Signalleitung (60) der Fernbedienungseinheit (26) mit der Anzeigeeinheit (24) und mindestens eine elektrische Leitung (49) der Anzeigeeinheit (24) mit der elektronischen Steuereinheit (38) verbunden ist.

5. Elektrofahrrad nach einem der vorhergehenden Ansprüche, wobei Bremssignalleitungen (56) unmittelbar mit der Anzeigeeinheit (24) verbunden sind.

6. Elektrofahrrad nach einem der vorhergehenden Ansprüche, wobei die Fernbedienungseinheit (26) mit einem einzelnen Sammelkabel (60) mit der Anzeigeeinheit (24) verbunden ist.

7. Elektrofahrrad nach einem der vorhergehenden Ansprüche, wobei Sensorleitungen (50) jeweils unmittelbar mit der elektronischen Steuereinheit (38) verbunden sind.

8. Elektrofahrrad nach einem der vorhergehenden Ansprüche, wobei die Kommunikation mittels CAN-Bus-Verfahren, vorzugsweise CAN-Open-Verfahren erfolgt.

## Claims

1. Electric bicycle having a bicycle frame (2), an electronic control unit (38), a drive unit (14), a battery unit (20), a display unit (24) and a remote control unit (26) for the display unit (24), wherein the remote control unit (26) is arranged in the region of a handlebar grip (28) at a distance from the display unit (24), **characterised in that** the electronic control unit (38) is arranged in the seat tube (8) of the bicycle frame (2) in the lower region and is fastened to the frame-side drive carrier (12) of the bicycle frame (2) via an L-shaped fastening angle (42), which is fastened to the rectangular housing of the control unit (38) by means of screws (40; 44), and the angle (42) is fastened to the drive carrier (12) by means of a screw (44).

2. Electric bicycle according to claim 1, wherein the electronic control unit (38) is only provided with line connections (48) at an end section (46) facing the drive unit (14).

3. Electric bicycle according to one of the preceding claims, wherein a stop (39), in particular a fastening element of the bottle holder, for the seat post is arranged above the electronic control unit (38).

4. Electric bicycle according to one of the preceding claims, wherein at least one signal line (60) of the remote control unit (26) is connected to the display unit (24) and at least one electrical line (49) of the display unit (24) is connected to the electronic control unit (38) .

5. Electric bicycle according to one of the preceding claims, wherein brake signal lines (56) are connected directly to the display unit (24).

6. Electric bicycle according to one of the preceding claims, wherein the remote control unit (26) is connected to the display unit (24) by a single busbar cable (60).

7. Electric bicycle according to one of the preceding claims, wherein sensor lines (50) are connected in each case directly to the electronic control unit (38).

8. Electric bicycle according to one of the preceding claims, wherein the communication is provided by means of a CAN bus method, preferably a CANopen method.

## Revendications

1. Bicyclette électrique comportant un cadre de bicyclette (2), une unité de commande électronique (38), une unité d'entraînement (14), une unité de batterie (20), une unité d'affichage (24) et une unité de télécommande (26) pour l'unité d'affichage (24), dans laquelle l'unité de télécommande (26) est disposée dans la zone d'une poignée de guidon (28) éloignée de l'unité d'affichage (24), **caractérisée en ce que** l'unité de commande électronique (38) est disposée dans le tube de selle (8) du cadre de bicyclette (2), dans la zone inférieure, et est fixée au support d'entraînement côté cadre (12) du cadre de bicyclette (2) par l'intermédiaire d'une équerre de fixation en forme de L (42) fixée au boîtier rectangulaire de l'unité de commande (38) au moyen de vis (40 ; 44), et l'équerre (42) est également fixée au support d'entraînement (12) au moyen d'une vis (44).

2. Bicyclette électrique selon la revendication 1, dans laquelle l'unité de commande électronique (38) est pourvue de connecteurs de fil (48) uniquement sur une partie d'extrémité (46) dirigée vers l'unité d'entraînement (14).

3. Bicyclette électrique selon l'une des revendications précédentes, dans laquelle, au-dessus de l'unité de commande électronique (38), une butée (39), en particulier un élément de fixation du porte-bidon, est disposée pour la tige de selle.

4. Bicyclette électrique selon l'une des revendications précédentes, dans laquelle au moins un fil de signal (60) de l'unité de télécommande (26) est relié à l'unité d'affichage (24) et au moins un fil électrique (49) de l'unité d'affichage (24) est relié à l'unité de commande électronique (38).

5. Bicyclette électrique selon l'une des revendications précédentes, dans laquelle des fils de signal de frein (56) sont directement reliés à l'unité d'affichage (24).

6. Bicyclette électrique selon l'une des revendications précédentes, dans laquelle l'unité de télécommande (26) est reliée à l'unité d'affichage (24) par un seul câble collecteur (60).

7. Bicyclette électrique selon l'une des revendications précédentes, dans laquelle des fils de capteur (50) sont chacun directement reliés à l'unité de commande électronique (38).

8. Bicyclette électrique selon l'une des revendications précédentes, dans laquelle la communication s'effectue au moyen d'un procédé de bus CAN, de préférence un procédé CAN Open.
